Europäisches Patentamt

European Patent Office

Office européen des brevets

(19)

(11) Publication number: 0 381 170
A2

(12) **EUROPEAN PATENT APPLICATION**

(21) Application number: 90101852.3

(22) Date of filing: 30.01.90

(51) Int. Cl.⁵: H04Q 9/14

(30) Priority: 30.01.89 JP 17684/89

(43) Date of publication of application:
08.08.90 Bulletin 90/32

(84) Designated Contracting States:
DE FR GB

(71) Applicant: TOSHIBA LIGHTING &
TECHNOLOGY CORPORATION
4-28, Mita 1-chome
Minato-ku Tokyo(JP)

(72) Inventor: Sasai, Toshihiko
12 Hakkei-So, 8-3, Yanagi-cho
Kanazawa-ku, Yokohama-shi(JP)
Inventor: Morita, Masayuki
1-3-3-1108, Namiki, Kanazawa-ku
Yokohama-shi(JP)
Inventor: Yamazaki, Kyoji
1502-2-509, Shinyoshida-cho
Kohoku-ku, Yokohama-shi(JP)

(74) Representative: Henkel, Feiler, Hänzel &
Partner
Möhlstrasse 37
D-8000 München 80(DE)

(54) Signal transmission system in which a plurality of terminals are processed with single address.

(57) A signal transmission system according to the present invention comprises a main processing apparatus (10) for transmitting transmission signals of predetermined bipolar pulses including an address signal, a start signal and a control signal, a plurality of terminals ($14_{1a}$, $14_{1b}$, ..., $14_{2a}$, ...) for receiving the transmission signals from the central processing apparatus (10), and pairs of transmission lines ($12_{1a}$, $12_{1b}$, ..., $12_{2a}$, ...) for connecting these terminals ($14_{1a}$, $14_{1b}$, ..., $14_{2a}$, ...) and the central processing apparatus (10). In this signal transmission system, the main processing apparatus (10) allows a random response from the terminals ($14_{1a}$, $14_{1b}$, ..., $14_{2a}$, ...). In each of the terminals ($14_{1a}$, $14_{1b}$, ..., $14_{2a}$, ...), when the transmission data is returned from the terminal ($14_{1a}$, $14_{1b}$, ..., $14_{2a}$, ...) to the main processing apparatus (10), a return 1-bit signal is compared with a voltage mode of the transmission lines ($12_{1a}$, $12_{1b}$, ..., $12_{2a}$, ...) in a signal processor (32) for every bit if the transmission data is the self address. Also, the return 1-bit signal is compared with the voltage mode of the transmission lines ($12_{1a}$, $12_{1b}$, ..., $12_{2a}$, ...) only for significant bits if the transmission data is the monitor data. Thus, it is discriminated whether the 1-bit signal has normally been transmitted.

F I G. I

## Signal transmission system in which a plurality of terminals are processed with single address

The present invention relates generally to a signal transmission system having a central processing apparatus and a plurality of terminals which are connected through pairs of transmission lines, and more particularly to a signal transmission system suitable for remote control, in which a plurality of terminals are processed with a single address and a central processing apparatus monitors loads connected to the terminals.

A conventional remote control signal transmission system (for example, Published Examined Japanese Patent Application No. 61-3155) comprises a central processing apparatus and a plurality of terminals which are connected through pairs of transmission lines. The central processing apparatus transmits to the terminals short pulses for address signals and control signals, and long pulses for monitor signals to the terminals. In each terminal, a series circuit of a current limiting resistor and a switch element is connected in parallel with the transmission line. While the long pulses for monitor signals are being transmitted, the switch element is opened/closed in accordance with the monitor content, and a change in current in transmission line, which is caused by the opening/closing operation of the switch element, is detected by the central processing apparatus.

When signals are transmitted from each terminal to the central processing apparatus, as in the conventional signal transmission system, in the current mode in which each terminal changes a sink current, the central processing apparatus can detect the change in current by converting the current into a voltage by using a detection resistor or the like. However, since this signal current flows only between a source terminal and the central processing apparatus, this monitor signal or the like cannot be detected at a location other than that between the source terminal and the central processing apparatus.

Thus, in this conventional signal transmission system, each terminal can detect only the signal supplied from other terminals located in its rear stage, and each terminal cannot detect signals from all the other terminals. The conventional signal transmission system is therefore unsuitable for random transmission, since in the random transmission mode in which the system is activated from the terminal side, the activated terminal cannot determine the presence/absence of the signal supplied from its front stage, i.e., the state of occupation of transmission line or collision of signals.

Under the circumstances, there has been proposed a signal transmission system (U.S. Serial No. 400,771 (or Japanese Patent Application No. 63-218031-33) filed by the present inventors) wherein a central processing apparatus detects a change in current mode signal transmitted from each terminal and converts the current mode signal to a voltage mode signal substantially in real time and transmits it through a transmission line. According to this signal transmission system, each terminal can detect a current mode signal output from other terminals, on the basis of a voltage mode signal supplied from the central processing apparatus, irrespective of where the terminal is located. In other words, each terminal compares a signal output from itself with the voltage mode signal transmitted through the transmission line, thereby confirming whether the signal output from itself has been correctly received by the central processing apparatus, or whether signals output from itself and other terminal have collided with each other.

However, in this real-time signal transmission system, there is a problem that, in the case where on/off data is assigned to bits and a plurality of terminals are assigned to a single address, if a signal is transmitted through a transmission line from a terminal other than the present terminal, this state is determined as an error.

An object of the present invention is to provide a signal transmission system wherein a plurality of terminals are processed with the same single address and the data of the respective terminals are matched bit by bit.

According to an aspect of the present invention, there is provided a signal transmission system comprising: a main processing apparatus for transmitting transmission signals of predetermined pulses including an address signal, a start signal and a control signal; pairs of transmission lines connected to the main processing apparatus; and a plurality of terminals, connected to the transmission lines, for receiving the transmission signals from the main processing apparatus and for returning to the main processing apparatus transmission data including at least a self address and monitor data, wherein said main processing apparatus allows a random response from said plurality of terminals, and each terminal includes means for comparing, when the transmission data is returned from the terminal to the main processing apparatus, a return 1-bit signal with a voltage mode of the transmission lines for every bit if the transmission data is the self address, and also for comparing the return 1-bit signal with the voltage mode of the transmission lines only for significant bits if the transmission data is the monitor data, thus discriminating whether the 1-bit signal has normally been transmitted.

According to another aspect of this invention, there is provided a signal transmission system comprising: a main processing apparatus for transmitting transmission signals of predetermined pulses including an address signal, a start signal and a control signal; pairs of transmission lines connected to the main processing apparatus; and a plurality of terminals, connected to the transmission lines, for receiving the transmission signals from the main processing apparatus and for returning to the main processing apparatus transmission data including at least a self address and monitor data, said plurality of terminals having the same address, wherein said main processing apparatus allows a cyclic response from said plurality of terminals, and each terminal includes means for comparing, when the transmission data is returned from the terminal to the main processing apparatus, a return 1-bit signal with a voltage mode of the transmission lines for every bit if the transmission data is the self address, and also for comparing the return 1-bit signal with the voltage mode of the transmission lines only for significant bits if the transmission data is the monitor data, thus discriminating whether the 1-bit signal has normally been transmitted.

Additional objects and advantages of the invention will be set forth in the description which follows, and in part will be obvious from the description, or may be learned by practice of the invention. The objects and advantages of the invention may be realized and obtained by means of the instrumentalities and combinations particularly pointed out in the appended claims.

This invention can be more fully understood from the following detailed description when taken in conjunction with the accompanying drawings, in which:

The accompanying drawings, which are incorporated in and constitute a part of the specification, illustrate a presently preferred embodiment of the invention and, together with the general description given above and the detailed description of the preferred embodiment given below, serve to explain the principles of the invention.

Fig. 1 is a block diagram showing the overall arrangement of a signal transmission system according to an embodiment of the present invention;

Fig. 2 is a functional block diagram of a central processing apparatus in the system shown in Fig. 1;

Fig. 3A and Fig. 3B show transmission signal formats in the system shown in Fig. 1;

Fig. 4 is a functional block diagram of a terminal in the system shown in Fig. 1;

Fig. 5 is a functional block diagram of a repeater in the system shown in Fig. 1;

Figs. 6A through 6D are timing charts for illustrating the operation of the repeater in the system shown in Fig. 1;

Fig. 7 is a circuit diagram showing in detail the central processing apparatus shown in Fig. 2;

Fig. 8 is a circuit diagram showing in detail the terminal shown in Fig. 4;

Fig. 9 is a flowchart for illustrating the operation of the repeater of the system shown in Fig. 1;

Fig. 10 is a flowchart for illustrating the operation of the central processing apparatus shown in Fig. 7;

Fig. 11 is a flowchart for illustrating the operation of the terminal shown in Fig. 8; and

Figs. 12A through 12E are timing charts of detailed formats for transmission signal operation modes in the system shown in Fig. 1.

An embodiment of the present invention will now be described with reference to the accompanying drawings.

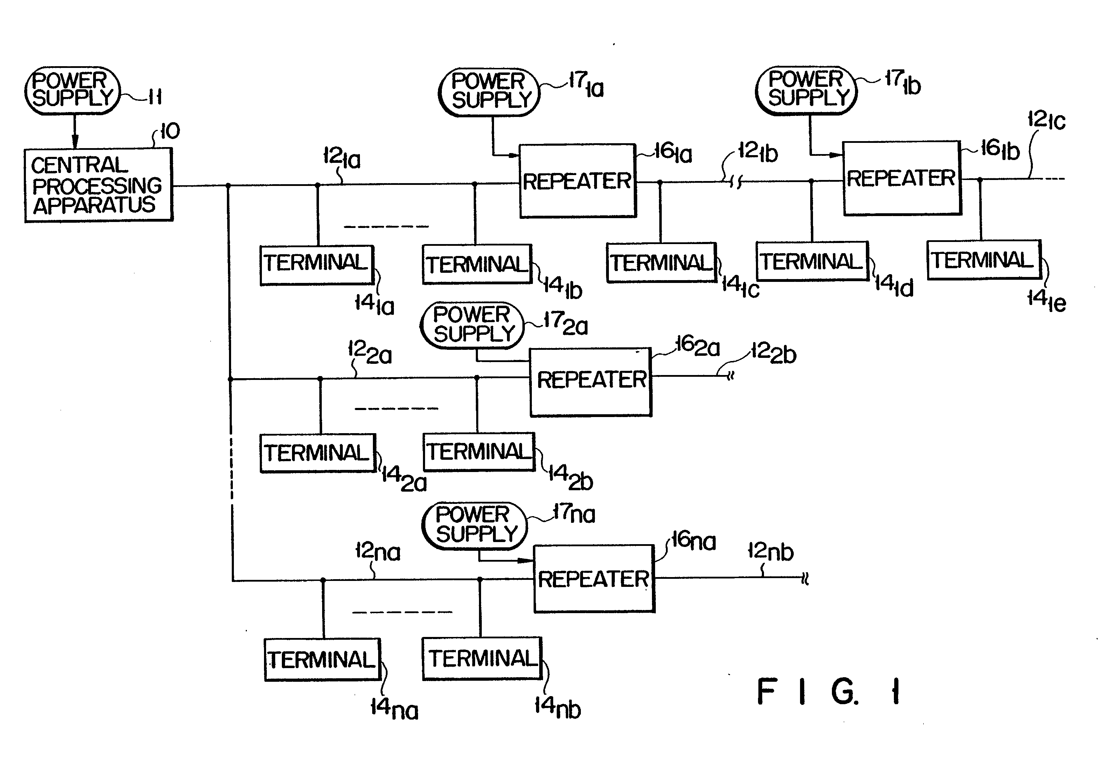

Fig. 1 shows a schematic structure of a remote control apparatus to which a signal transmission system according to an embodiment of the invention has been applied. This apparatus comprises a master apparatus using a central processing apparatus 10 with a power supply 11, slave apparatuses or terminals 14 ($14_{1a}$, $14_{1b}$, $14_{1c}$, ..., $14_{2a}$, ...) connected to the central processing apparatus 10 through pairs of transmission lines (double transmission line) 12 ($12_{1a}$, $12_{1b}$, $12_{1c}$, ..., $12_{na}$, ...), repeaters 16 ($16_{1a}$, $16_{1b}$, ..., $16_{na}$, ...) connected between transmission lines $12_{1a}$ and $12_{1b}$, $12_{1b}$ and $12_{1c}$, .... Each terminal 14 has a load (not shown) such as a luminaire, a wall switch, or an illuminance sensor. The repeaters 16 are connected to power supplies 17 ($17_{1a}$, $17_{1b}$, ..., $17_{2a}$, ...).

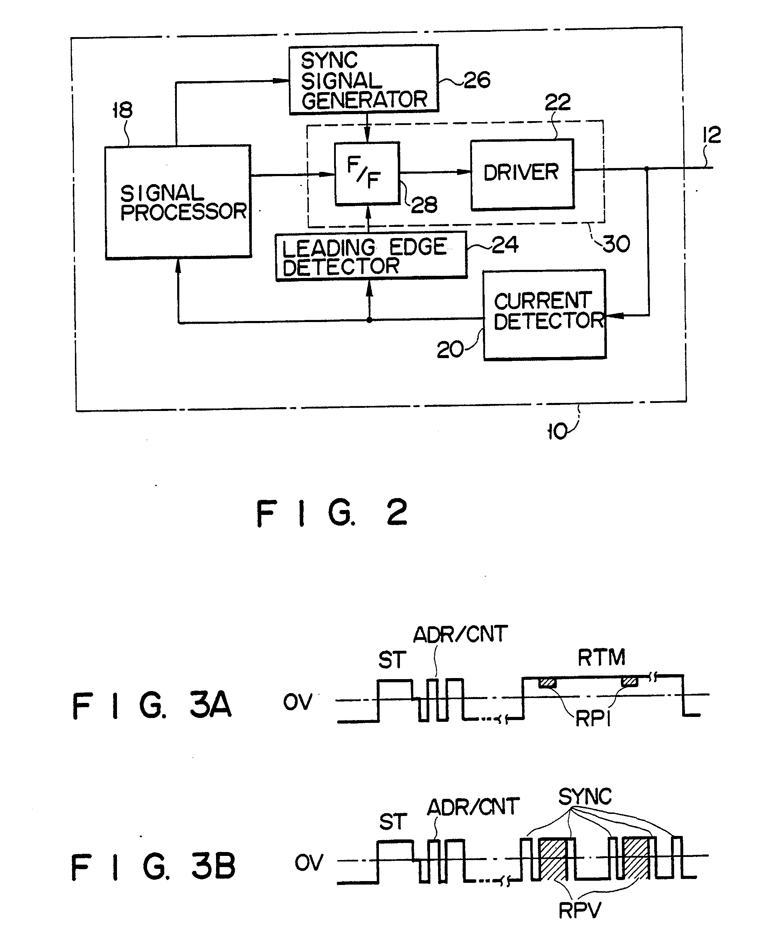

Fig. 2 is a functional block diagram of the central processing apparatus 10. In the central processing apparatus 10, a leading edge detector 24, a sync signal generator 26 and a flip-flop (F/F) 28 are added to the structure of a central processing apparatus of a conventional system which is constituted by a signal processor 18, a current detector 20 and a driver 22, as shown in Fig. 2. Note that the central processing apparatus 10 may be provided with a keyboard, switches, or sensors for inputting data, and a display unit such as a CRT for displaying various data, etc. (not shown).

The signal processor 18 fetches data from the keyboard, switches, sensors, or the like in accordance with a predetermined sequence, acquires monitor data of the terminals, generates a control signal on the basis of this data, and causes the monitor display unit to display data. The signal processor 18 also generates a transmission voltage signal including the control signal. In a central processing apparatus of the conventional system, the voltage signal is supplied directly to the driver 22 and is transmitted through the transmission lines 12 as a transmission signal. Thus, the format of the transmission voltage signal is the same as the format shown in Fig. 3A that is a basic transmission signal format from the central processing apparatus.

In Fig. 3A, the transmission voltage signal, or a transmission signal in a conventional system, includes a start signal ST consisting of a "1"-level long pulse signal, a transmission signal ADR/CNT consisting of "1"-level short pulses corresponding in number to 1/2 a predetermined bit count and indicating transmission data such as an address ADR of a destination terminal, a control signal CNT, and the like, a return period signal RTM indicating a return standby period (or terminal transmission period) such as monitor data from a destination terminal, and the like. In the transmission signal ADR/CNT, successive "1"- and "0"-level portions express 1-bit data, respectively. When "1"- or "0"-level portions continue to be short, they express data "0"; when long, they express data "1". In Fig. 3A, the signal ADR/CNT represents data "001...".

Referring back to Fig. 2, the current detector 20 converts to a voltage a current (a current mode signal such as monitor data indicated by hatched lines in Fig. 3A) flowing across the central processing apparatus 10 and the terminal 14 through the transmission lines 12.

The driver 22 drives the transmission lines 12 in accordance with a bipolar signal according to an input signal. For example, if an input signal is at "1" level, the driver 22 pulls up the transmission lines to +24 V; if it is "0" level, it pulls down the transmission lines to -24 V. In the conventional central processing apparatus, a signal voltage output of the signal processor 18 is directly input to the driver 22. In this embodiment, as shown in Fig. 3B, the start signal ST and the transmission signal ADR/CNT are directly output. However, the return period signal RTM output from the signal processor 18 during the return period is output after it is suitably processed by the F/F 28. The F/F 28 and the driver 22 constitute a transmitter 30 of the central processing apparatus of this embodiment.

The leading edge detector 24 differentiates the output voltage of the current detector 20 to detect a leading edge of a current mode signal sent from each terminal.

The sync signal generator 26 generates a sync signal SYNC at a predetermined cycle only in the return standby period (terminal transmission period) RTM for the transmission from each terminal 14 to the central processing apparatus 10.

The voltage output of the F/F 28 goes to a high level in response to the leading edges of the voltage signal output from the signal processor 18, and the sync signal SYNC output from the sync signal generator 26, and goes to a low level in response to the trailing edges thereof. The F/F 28 inverts its output in response to a detection output from the leading edge detector 24 as a trigger signal. More specifically, the F/F 30 supplies to the driver 22 a voltage which varies in accordance with changes in output of the signal processor 18, during the transmission period of the address signal and control signal. When the output from the signal processor 18 is constant during the return standby period for the transmission from the terminal 14, the F/F 28 supplies to the driver 22 a voltage having "1" level when the current mode signal detected by the current detector 20 or the sync signal output from the sync signal generator 26 goes to "1" level, and having "0" level when the sync signal output falls to "0" level.

The driver 22 is driven in accordance with the output voltage from the F/F 28, so that the signals shown in Figs. 3A and 3B are output. More specifically, the start signal ST and the transmission signal ADR/CNT are sent onto the transmission lines 12 as voltage mode signals having the same waveform as that of the output from the signal processor 18. In the terminal transmission period RTM, when the sync signal SYNC is sent out from the central processing apparatus 10 and a current mode signal RPI is sent from each terminal 14 in accordance with the sync signal SYNC, a voltage mode signal RPV corresponding to the signal RPI is sent onto the transmission lines 12.

In the transmission system shown in Fig. 1, during the terminal transmission period (return period) RTM, the current mode signal from each terminal 14 is converted to a voltage mode signal by the central processing apparatus 10 and is sent onto the transmission lines 12. For this reason, all the terminals 14 can discriminate the contents of current mode signals from downstream-side terminals (e.g., terminals $14_{1c}$, $14_{1d}$ ... with respect to terminal $14_{1b}$) and from upstream terminals (e.g., terminal $14_{1a}$ with respect to the terminal $14_{1b}$).

Therefore, any terminal can discriminate signal transmission states of all the terminals in accordance with the voltage mode signals, and the terminal itself can determine a ready sate of the transmission lines 12 or the presence/absence of signal collision. Namely, this embodiment can realize a random transmission system which is substantially free from signal collision without increasing a load of the central processing apparatus and has its inherent feature of high-speed transmission.

Furthermore, when each terminal 14 transmits a current mode signal, it discriminates the voltage mode signal, to which the current mode signal has been converted by the central processing apparatus 10, thereby to confirm that the central processing apparatus 10 has received the current mode signal. Consequently, an answer signal from the central processing apparatus 10 can be dispensed with, and a transmission speed can be increased regardless of a random or cyclic mode.

In the system shown in Fig. 1, there are provided two modes for activating monitor data of each terminal 14. One mode is called a central activation (master activation) mode wherein the central processing apparatus 10 transmits a transmission demand signal (including the destination address and control signal) onto the transmission lines 12 and receives monitor data sent back from the destination terminal 14. The other is called a slave activation mode wherein the central processing apparatus receives transmission data (including self-address and monitor data) sent out at random from the terminal in which transmission demand (e.g., indicated by a change in monitor data) is generated.

The terminal 14 is designed to add a marker bit having value "0" constantly (see Figs. 12A through 12E mentioned below) in the return data in the master activation mode. The signal processor 18 of the central processing apparatus 10 detects the marker bit to determine the state of the transmission lines 12.

In the conventional signal transmission system, since the marker bit is not contained in the return data from the terminal 14, it is not possible to discriminate the return data with all bits having value "1" from a transmission line short-circuit, resulting a malfunction. When the marker bit "0" is not detected and all bits of the return data are found to have value "1", a transmission short-circuit is determined and a predetermined process for transmission line short-circuit is carried out. Thus, the return data with all bits having value "1" can be discriminated from the transmission line short-circuit, and a malfunction due to erroneous recognition of data can be prevented. If a marker bit having value "1" constantly, it is also possible to detect the opening of the transmission lines 12, for example, the occurrence of breaking of lines.

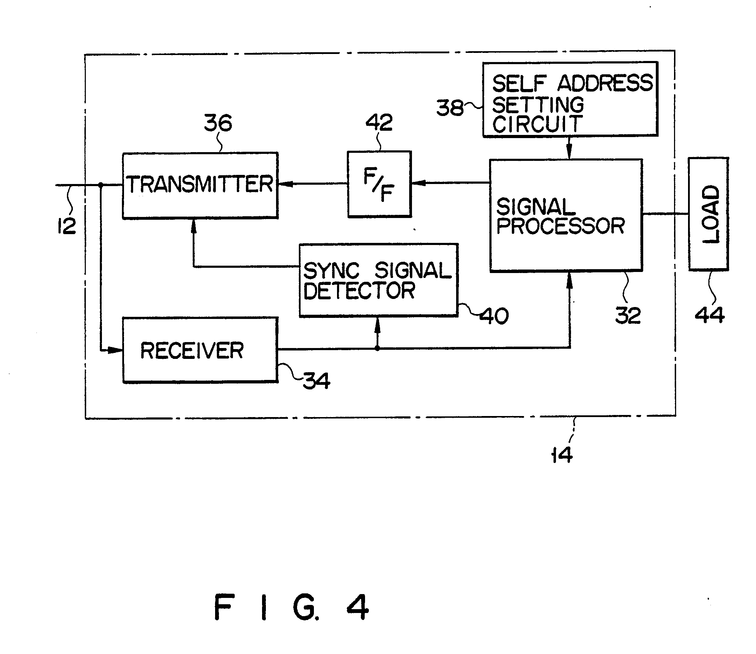

Fig. 4 is a functional block diagram of the terminal 14 in the transmission system shown in Fig. 1. The terminal 14 comprises a sync signal detector 40 and a flip-flop circuit (F/F) 42, in addition to the conventional structure including a signal processor 32, a receiver 34, a transmitter 36 and a self address setting circuit 38. The signal processor 32 is connected to one or more loads 44. Further, the terminal 14 is provided with a rectifier (not shown) for rectifying a bipolar pulse of ±24 V sent from the central processing apparatus 10 and allowing the rectified pulse to be used as power for operating the terminal.

The receiver 34 receives the voltage mode signal transmitted from the central processing apparatus 10 onto the transmission lines 12. Based on the output of the receiver 34, the sync signal detector 40 detects the sync signal of the voltage mode sent from the central processing apparatus 10 onto the transmission lines 12.

The signal processor 32 operates in accordance with a predetermined sequence. That is, the processor 32 receives a control signal or the like included in the voltage mode signal received at the receiver 34 and supplies a load drive signal based on the control signal or the like to each load 44. If the load 44 is a monitor load, the processor 32 detects its monitor signal to create monitor data, and outputs the monitor data to the transmitter 36 in accordance with the control signal or the like. Further, the signal processor 3 outputs a marker bit of value "1" to the transmitter, subsequent to the output of the monitor data. Each time the sync signal detector 40 detects one sync signal, the return data consisting of the monitor data and the marker bit signal is supplied to the transmitter 36 in a bit-by-bit manner.

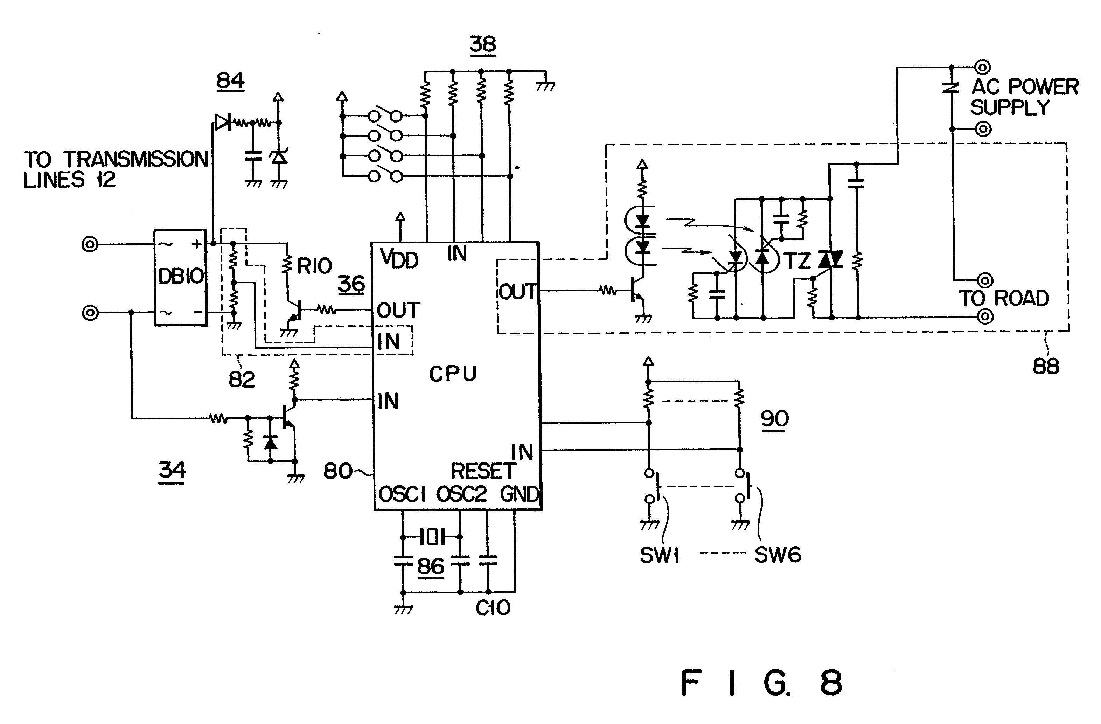

The transmitter 36 changes the sink current value in the terminal 14, in accordance with the monitor data and the "1" level of the marker bit signal which are output from the signal processor 32 bit-by-bit. The sink current value is changed by connecting or not connecting a resistor (resistor R10 in Fig. 8) between the transmitter lines 12. Thus, the monitor data and marker bit signal are output onto the transmission lines 12 as a current mode signal. When the output impedance of the driver 22 of the central processing apparatus 10 is low, the line voltage of the transmission lines 12 are substantially not caused by the current mode signal. The hatched portion RPI shown in Fig. 3A schematically illustrates the current mode signal.

The F/F 42 latches the output from the signal processor 32.

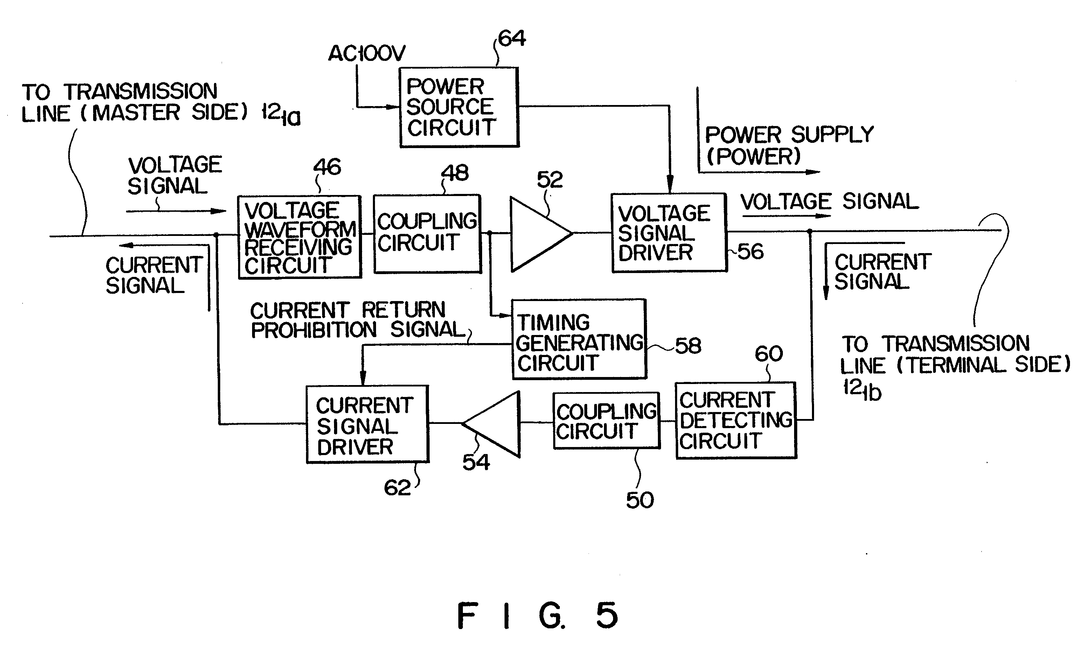

Fig. 5 is a functional block diagram of the repeater 16 in the signal transmission system shown in Fig. 1. Where the transmission lines 12 are long, the repeater 16 is provided midway in the transmission lines 12 in order to amplify signals or correct waveform distortion, or in order to boost electric power to the terminal 14 when the number of terminals 14 is large and power from the central processing apparatus 10 is insufficient. The repeater 16 comprises a voltage waveform receiving circuit 46, coupling circuits 48 and 50, amplifiers 52 and 54, a voltage signal driver 56, a timing generating circuit 58, a current detecting circuit 60, a current signal driver 62, and a power source circuit 64.

The voltage waveform receiving circuit 46 and the current signal driver 62 have structures similar to those of the receiver 34 and transmitter 36 of the terminal 14. The voltage signal driver 56 and the current detecting circuit 60 have structures similar to those of the current detector 20 and driver 22 of the central processing apparatus 10. The coupling circuits 48 and 50 are constituted by photocouplers or insulating transformers for insulating the input side and the output side in a DC manner. The amplifiers 52 and 54 perform signal amplification and waveform shaping. The power source circuit 64 supplies power to the terminal 14 arranged on the opposite side to the central processing apparatus 10 with respect to the repeater 16, namely, arranged in the rear stage of the repeater 16.

For example, in the repeater $16_{1a}$, the voltage waveform receiving circuit 46 receives voltage signals such as transmission signal and a sync pulse supplied from the central processing apparatus 10 to the terminal $14_{1c}$. The voltage signals are amplified and shaped by the amplifier 52. An output from the amplifier 52 activates the voltage signal driver 56. An output from the driver 56 is transmitted to the terminal $14_{1c}$. On the other hand, a current signal such as a return signal from the terminal $14_{1c}$ is received by the the current detecting circuit 60 and is then amplified and shaped by the amplifier 54. An output from the amplifier 54 activates the current signal driver 62. An output from the driver 62 is supplied to the central processing apparatus 10. Thus, from the viewpoint of the central processing apparatus 10, the repeater 16 may be regarded as the terminal. From the viewpoint of the terminal, the repeater 16 may be regarded as the central processing apparatus 10.

In the repeater 16, the central processing apparatus side and the terminal side are insulated in a DC manner by the coupling circuits 48 and 50. Power is supplied to the terminal side from the power source circuit 64 of the repeater.

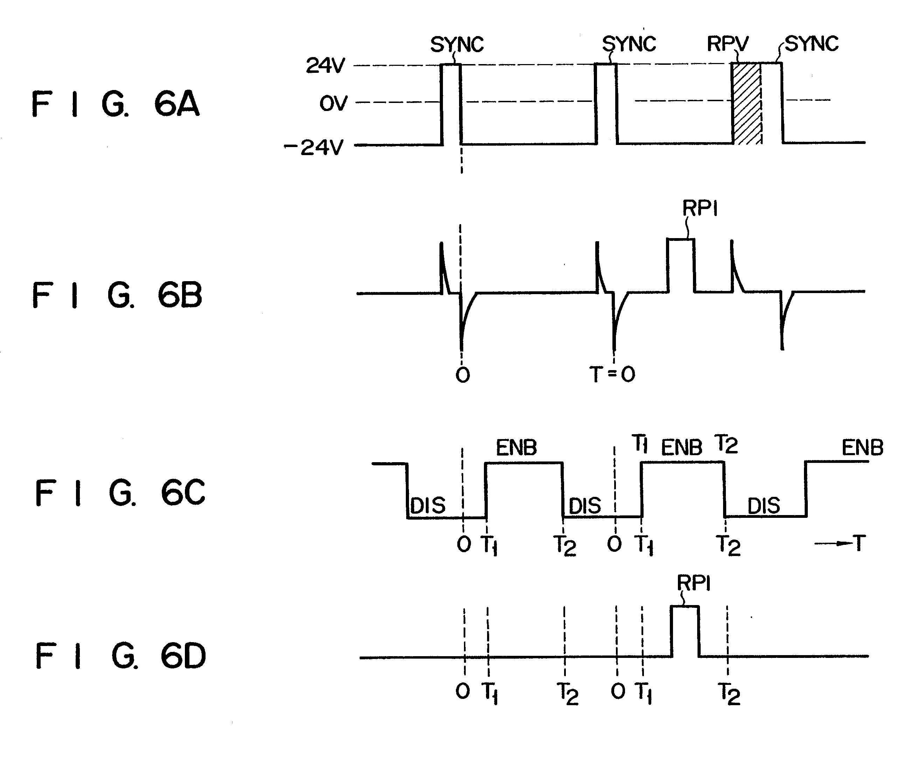

The reason for performing waveform shaping will now be described with reference to Figs. 6A through 6D. A voltage signal supplied from the repeater 16 to the terminal 14 is a bipolar pulse signal of ±24 V, as shown in Fig. 6A. On the terminal side, this pulse signal is rectified and employed as power source. Thus, when the voltage signal such as the sync signal SYNC or the like is changed from +24 V to -24 V or from -24 V to +24 V, a current (current waveform on the terminal side) as shown in Fig. 6B is mixed in the capacitance of the rectifying circuit of the transmission lines 12 and terminal 14. This current is detected by the current detecting circuit 60 and the current signal driver 62 is actuated. If the repeaters 16 are connected in multi-stages, the width of the current signal as shown in Fig. 6B increases, and the current is mistaken, on the central processing apparatus side, for a signal from other terminals, resulting in malfunction or impossibility of transmission.

In order to solve this problem, a current return prohibition signal DIS as shown in Fig. 6C is generated from the timing generating circuit 58 in a predetermined period including a bipolar pulse signal change time. In other words, the current signal produced at the time of change of polarity is not transmitted to the central processing apparatus side. Fig. 6D shows a waveform of a current signal sent from the repeater 16 to the central processing apparatus side (the master apparatus side).

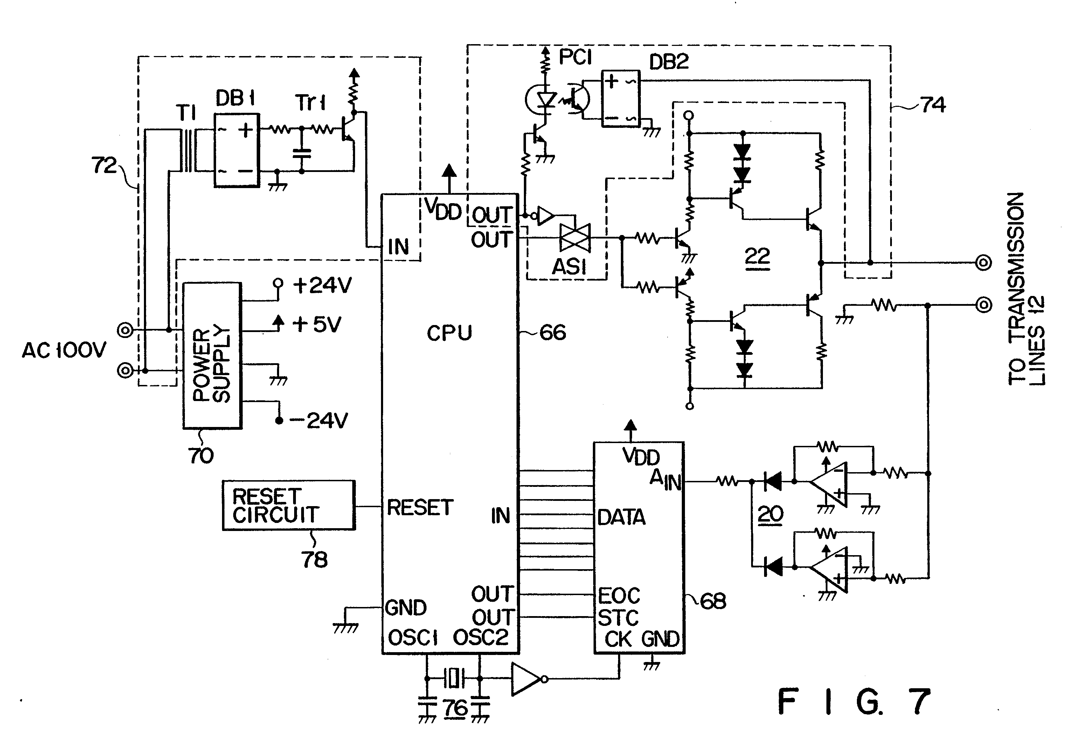

Fig. 7 shows a detailed circuit arrangement of the central processing apparatus 10 in the remote control apparatus shown in Fig. 1.

In Fig. 7, the overall operation of the central processing apparatus 10 is controlled by a central processing unit (CPU) 66. The functions of the signal processor 18, leading edge detector 24, sync signal generator 26 and flip-flop 28 shown in Fig. 2 are realized by an operation program of the CPU 66.

The central processing apparatus shown in Fig. 7 comprises an A/D converter 68, a DC power supply 70, a zero-crossing detector 72, a zero-crossing signal sending circuit 74, an oscillator 76 and a reset circuit 78. The A/D converter 68 converts an analog output of the current detector 20 into digital data capable of being processed by the CPU 66. The DC power supply 70 generates DC voltages of, for example, +24 V and -24 V for the output stage of the driver 22 and a DC voltage of +5 V for circuits other than the output stage on the basis of an AC power supply. The zero-crossing detector 72 detects a zero-crossing point of the AC power supply, and the zero-crossing signal sending circuit 74 sends a zero-crossing signal onto the transmission lines 12. The oscillator 76 generates a drive clock for the CPU 66, and the reset circuit 78 resets the CPU 66 to an initial state.

When a transmission signal is transmitted from the central processing apparatus to the terminals, the CPU 66 supplies to the driver 22 a voltage signal having a waveform similar to that shown in Fig. 3B (in which "0" level = 0 V and "1" level = 5 V). The driver 22 sends a voltage mode signal having the waveform as shown in Fig. 3B (in which "0" level = -24 V and "1" level = +24 V) onto the transmission lines 12 in accordance with the voltage signal from the CPU 66.

The zero-crossing detector 72 detects a zero-crossing point of the AC power supply, and inputs a "1"-level zero-crossing signal to the CPU 66. In the detector 72, an AC power supply voltage of, e.g., AC 100 V is supplied to a diode bridge DB1 through an insulating transformer T1, and a full-wave rectified output from the diode bridge DB1 is applied to the base of a transistor Tr1 of class super-C amplification. Thus, when the full-wave rectified output is 0 V, i.e., at the zero-crossing timing of the AC power supply, the detector 72 generates a zero-crossing signal of 5 V at the collector of the transistor Tr1.

The CPU 66 supplies the zero-crossing signal to the zero-crossing signal sending circuit 74, if necessary, for example, in the central activation mode. In the zero-crossing signal sending circuit 74, an analog switch AS1 is turned off upon inputting of the zero-crossing signal to interrupt supply of a voltage signal from the CPU 66 to the driver 22, thus interrupting signal transmission from the central processing apparatus to the terminals. The zero-crossing signal from the CPU 66 drives a photocoupler PC1 to short-circuit AC terminals of a diode bridge DB2, thus short-circuiting the transmission lines 12. In this manner, a zero-crossing signal of 0 V is transmitted to the terminals.

In a conventional system, the zero-crossing signal is generated in each terminal. However, if the zero-crossing signal is generated in the central processing apparatus and is transmitted to the terminals, as described above, only a single zero-crossing detector is needed. Compared to a case where the zero-crossing detector is arranged in each terminal, the circuit configuration of the entire system can be simplified and the manufacturing cost can be reduced.

Fig. 8 shows a detailed circuit arrangement of the terminal 14 in the transmission system shown in Fig. 1.

The overall operation of the terminal 14 shown in Fig. 8 is controlled by a microprocessor (CPU) 80. The functions corresponding to the signal processor 32, sync signal detector 40, and F/F 42 shown in Fig. 4 are realized by an operation program of the CPU 80. Note that reference numerals 34, 36 and 38 denote the receiver, the transmitter and the self address setting circuit common to those shown in Fig. 4, respectively.

Reference numeral 82 denotes a zero-crossing signal receiver. A DC power supply 84 generates a DC output of 5 V after all-wave rectifying a bipolar pulse of ±24 V sent from the central processing apparatus 10 or repeater 16 onto the transmission lines 12. Numeral 86 denotes a clock generator. A capacitor C10 serves to reset the CPU 80 at the time of turning on the terminal. A diode bridge DB10 serves to match the transmission lines 12 as a bipolar (AC) system with the transmitter 84 and the zero-crossing signal receiver 82 as a unipolar (DC) system.

A single or a combination of load devices are connected to the terminal, on as-needed basis. As examples of the load devices, a dimmer 88 as a load requiring a zero-crossing signal and a switch 90 as a monitor load are employed. In the load devices 88 and 90, only load drive portions are illustrated. However, the load device 88 is not limited to the dimmer, but may be a heater if it performs phase control.

The receiver 34 generates a signal of 0 V or 5 V in accordance with whether the voltage mode of the transmission lines 12 is "0" or "1", and supplies the generated signal to the CPU 80. The transmitter 36 sends the transmission signal generated by the CPU 80 in the terminal to the CPU, and connects a resistor R10 to the transmission lines 12 only when the transmission signal is "1". In this case, a resistor R10 serves as a current sink. A current RPI flowing through the transmission lines 12 changes by a current flowing through the current R10, as indicated by the hatched portion in Fig. 3A, and the change in current is detected by the current detector 20 (Fig. 2) of the central processing apparatus 10, thus performing current-mode signal transmission from the terminal to the central processing apparatus.

As shown in Figs. 12A through 12E, a line voltage of the transmission lines 12 becomes 0 V only when the zero-crossing signal is transmitted from the central processing apparatus; otherwise, it is set at +24V or -24 V. More specifically, a DC terminal voltage of the diode bridge DB10 is set at 0 V only when the zero-crossing signal is transmitted; otherwise, it is set at about +24 V. The zero-crossing signal receiver 82 is a voltage dividing resistor circuit for voltage-dividing the DC terminal voltage of the diode bridge DB10 to about 1/5.

The CPU 80 detects a change in output from about 5 V to 0 V from the zero-crossing signal receiver 82 as a zero-crossing signal. The CPU 80 generates pulses of 5 V in accordance with the zero-crossing signal and a phase angle based on the control signal transmitted from the central processing apparatus every half cycle of the AC power supply, and supplies them to the dimmer 88. In the dimmer 88, a triac TZ is turned on at an "ON" angle designated by the control signal, thus turning on a lamp as a load (not shown).

On the other hand, in the monitor load 90, switches SW1 to SW4 are individual switches, a switch SW5 is a setting switch, and a switch SW6 is a specific switch. If any one of these switches is operated, the CPU 80 detects the ON/OFF of the switch and forms monitor data representative of the ON/OFF. As described above, the monitor data is sent to the central processing apparatus in the current mode.

The individual switches SW1 to SW4 serve to change the lighting state of dimmers 88 to which these switches are assigned. The setting switch SW5 serves to set the lighting state changed by switches SW1 to SW4 as the current lighting pattern. The specific switch SW6 serves to invert a signal of predetermined bits of transmission data, which is supplied from the terminal 14 to the central processing apparatus 10.

For example, in the terminal of self address "0001", when the specific switch SW6 is pressed down to invert the uppermost bit of the self address, the self address output from the terminal becomes "1001". Thus, a setting signal or the like of the terminal of self address "1001" can be transmitted from the terminal of self address "0001". Thus, patterns can be assigned to the terminals having no individual switches such as sensors, without changing the mode in the central processing apparatus. Therefore, the processing in the central processing apparatus can be simplified.

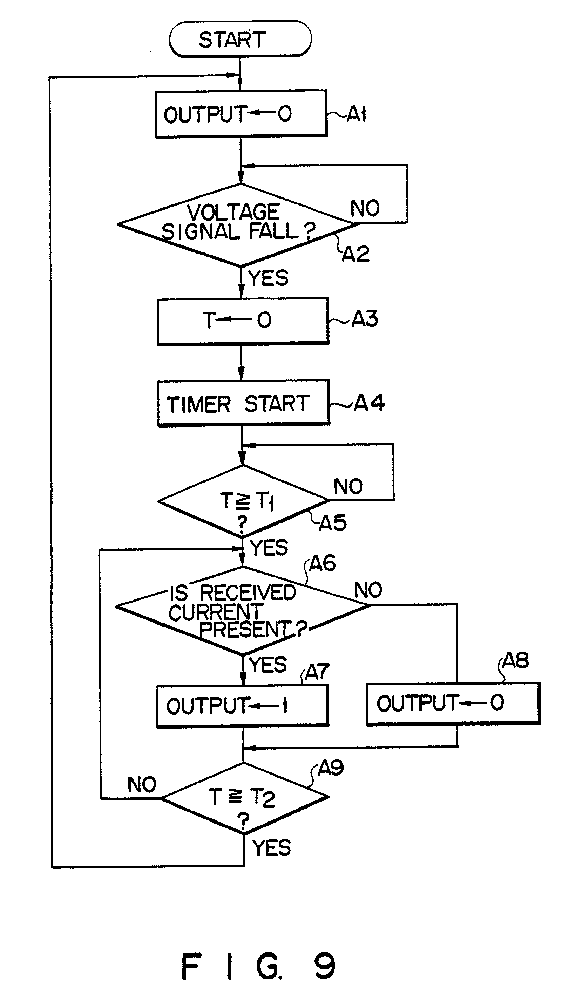

The operation of the system with the arrangement shown in Figs. 1 through 8 will now be described with reference to flowcharts of Figs. 9 through 11 and timing charts of Figs. 12A through 12E.

Fig. 9 is a flowchart illustrating the current signal relay operation in the repeater 16. In step A1, the output of the current signal driver 62 is set to "0". In step A2, the operation is suspended until the output of the voltage waveform receiving circuit 46 falls. Once this output falls, the control flow advances to step A3, and the timer T in the generating circuit of the terminal is reset. In step A4, the timer T is started. In step A5, the operation suspended until a predetermined time T1 has lapsed in the timer T. When the time T1 has lapsed, the control routine advances to step A6.

In step A6, it is determined whether the current signal from the terminal 14 has been received, on the basis of the output of the current detecting circuit 60. If the current signal has been received, the output of the current signal driver 62 is set to "1" in step A7. If the current signal has not been received in step A6, the output of the current signal driver 62 is set to "0" in step A8. When the output is set to "1" or "0" in step A7 or A8, the time that has lapsed in the timer T is examined once again in step A9. If the elapsed time has not reached time T2, the control routine returns to step A6, and the process of steps A6 to A9 is repeated. If the elapsed time has reached time T2, the control routine returns to step A1, and the process of steps A1 to A9 is repeated. Thus, the current signal relay from the terminal 14 to the central processing apparatus 10 is enabled (ENB) only in the time $T_1$ to $T_2$, and is disabled (DIS) in other periods.

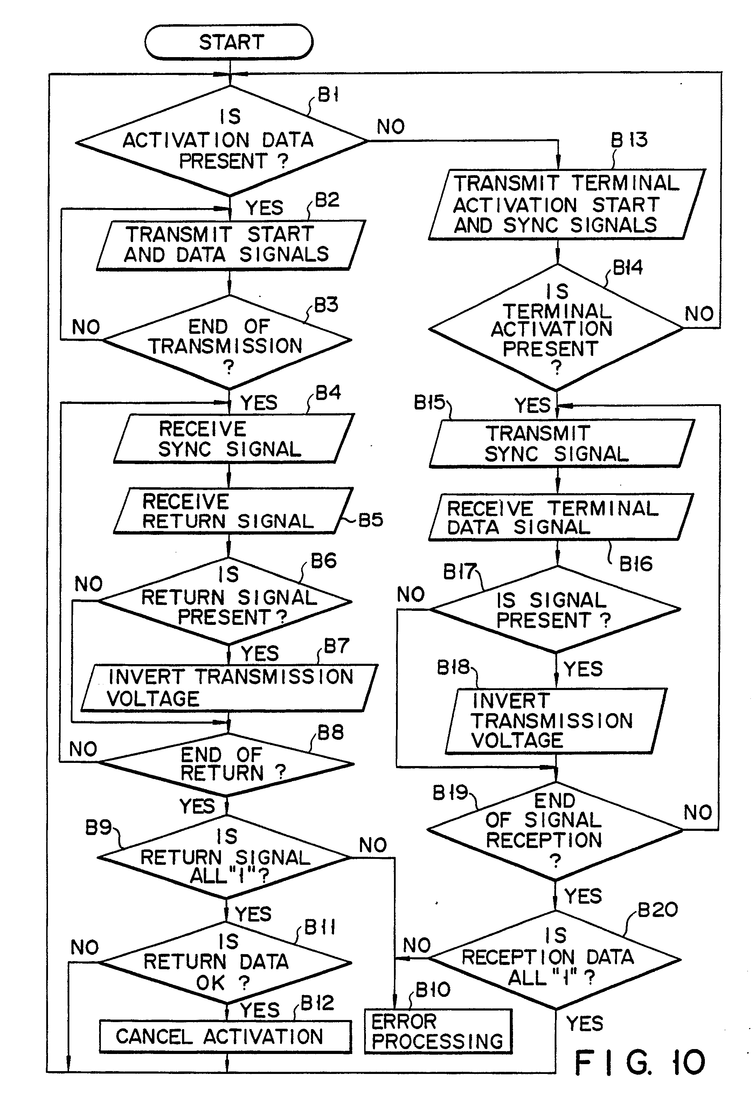

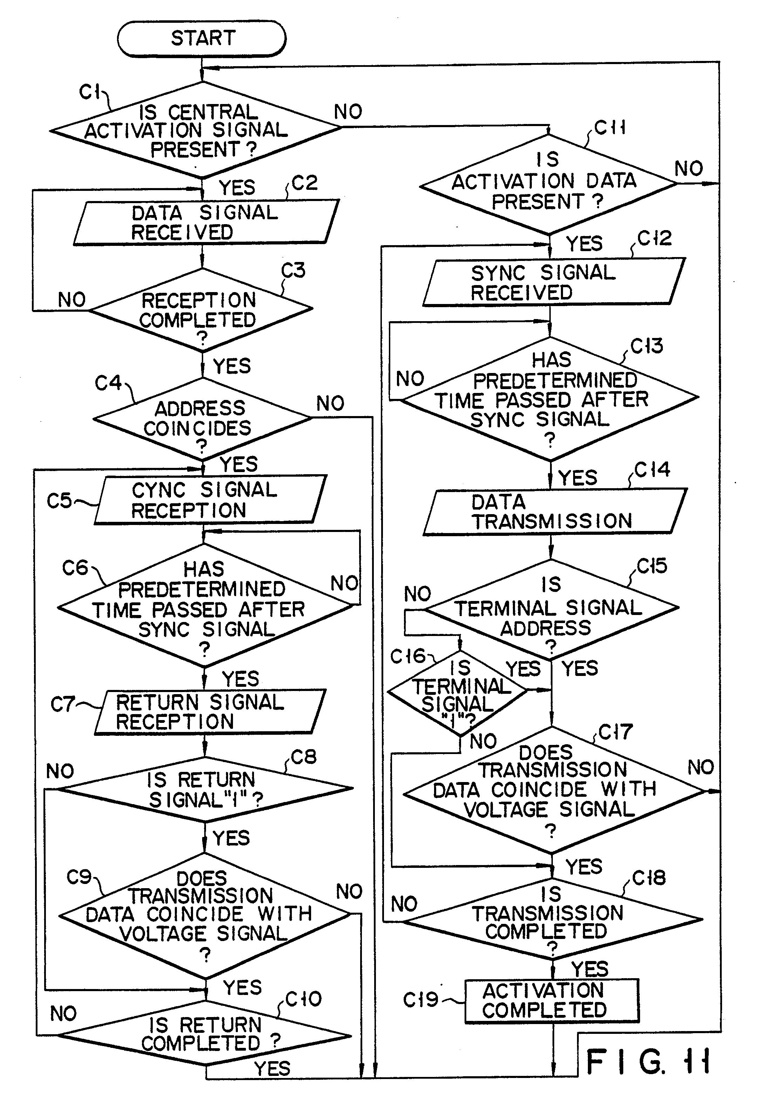

On the other hand, when the power switches of the central processing apparatus 10 and the terminal 14 are turned on, the central processing apparatus 10 and the terminal 14 start predetermined operations in accordance with control programs stored in their CPUs. First various memories, flags, registers, and the like incorporated in each CPU are initialized. Then, the central processing apparatus 10 and the terminal 14 execute endless loop processing, as shown in the flowcharts of Fig. 10 and Fig. 11, respectively.

### (1. Operation of Central Processing Apparatus 10)

Referring to Fig. 10, the central processing apparatus 10 discriminates presence/absence of activation data in step B1. The activation data means data sent from each device to other device. In this case, if data to be sent to each terminal, i.e., activation data is detected, (i) central activation (master activation) processing in step B2 through B12 is executed; otherwise, (ii) normal mode processing in steps B13 to B20 is executed.

### (i) Central Activation Processing

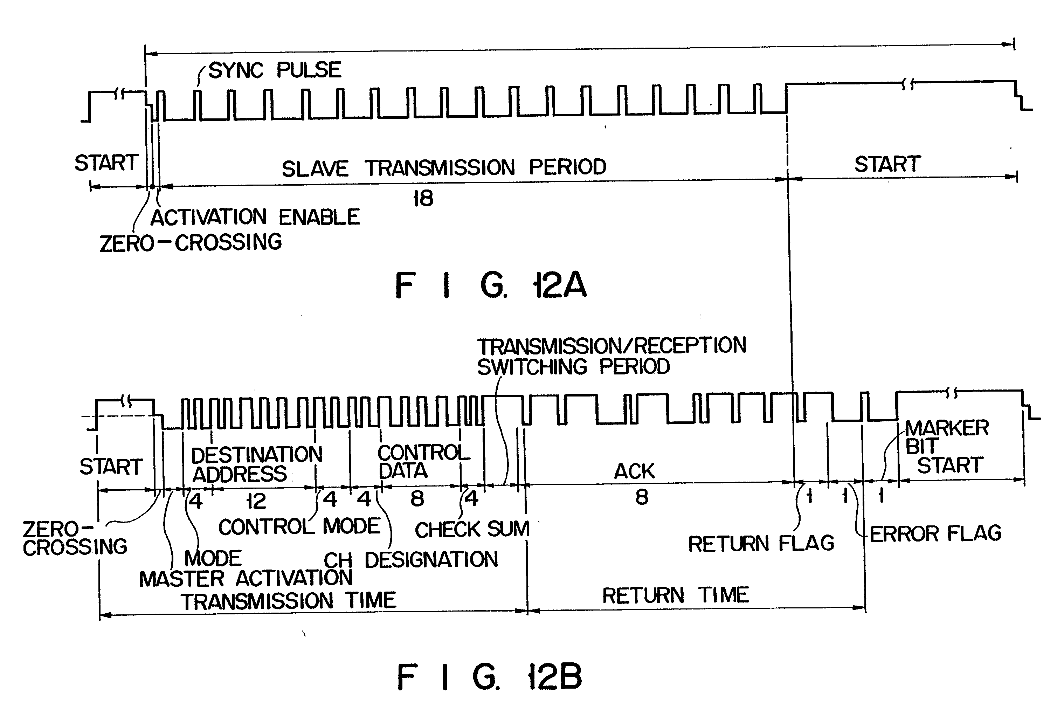

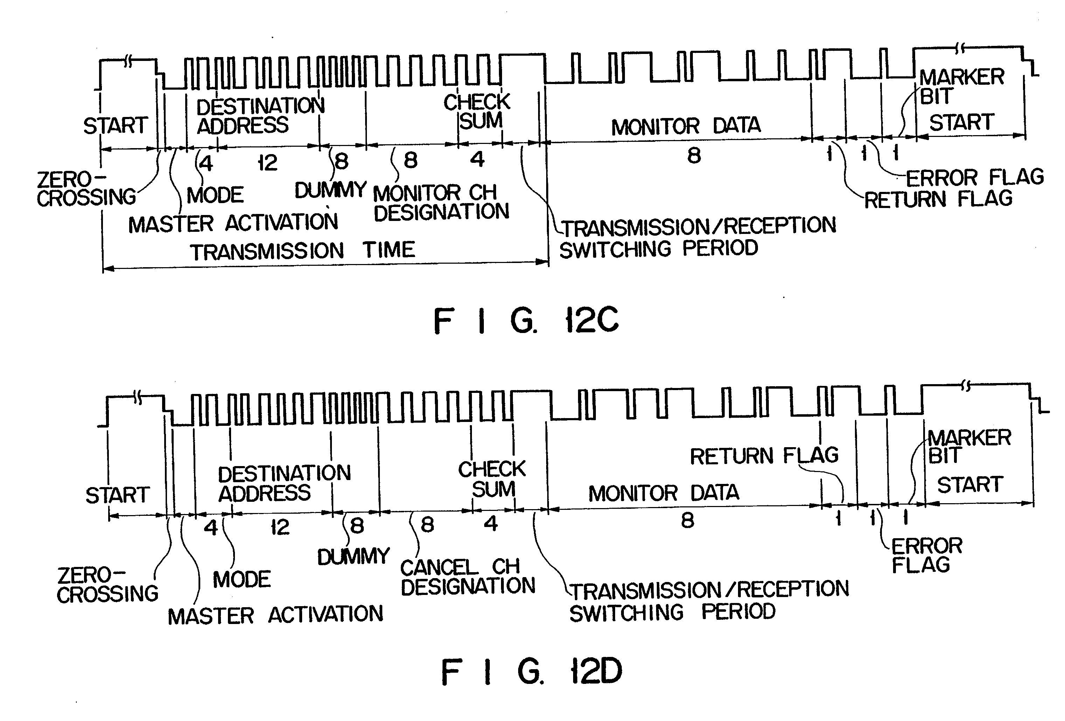

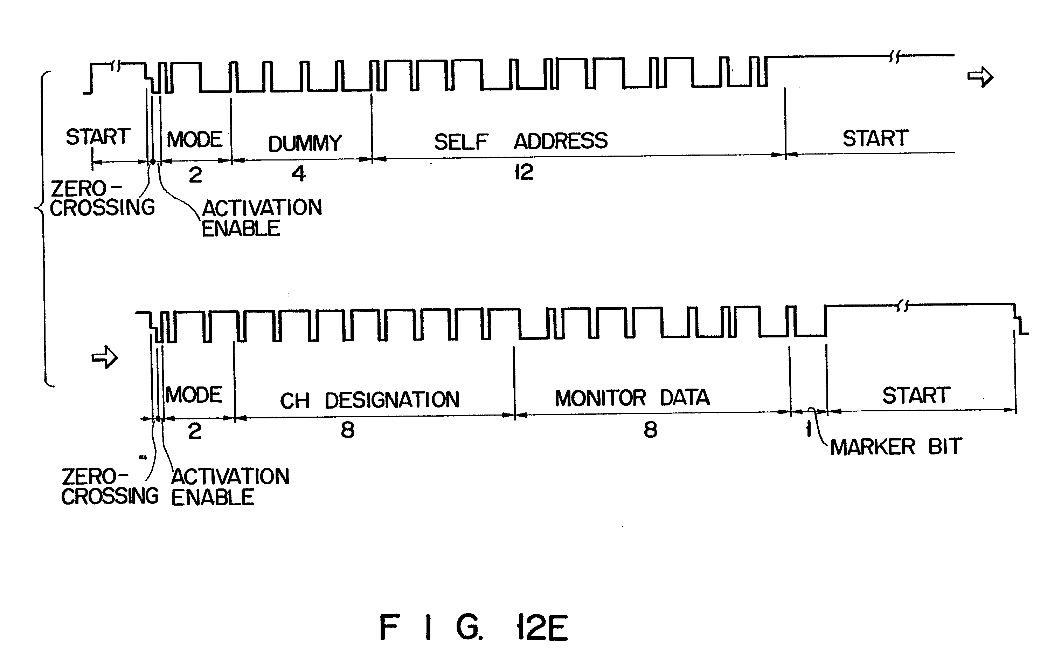

In the central activation processing, in step B2, transmission data having a start signal ST, a destination terminal address ADR, a control signal (activation data) CNT, and the like shown in Figs. 12B through 12D is transmitted in a voltage mode from a driver 22 onto the transmission lines 12 in accordance with the activation data. Fig. 12A shows the normal mode (20 ms at one power supply cycle = 50 Hz; 16.7 ms at the cycle = 60 Hz). Figs. 12B, 12C and 12D show transmission signals in a master activation mode and respectively indicate a control mode, a monitor mode, and a slave activation cancel mode. Fig. 12E shows a transmission signal in a slave activation mode (to be described later).

The transmission data is output bit by bit via every processing in step B2. In step B3, it is checked if the processing in step B2 is repeated the predetermined number of times corresponding to the number of bits of the transmission data. If the processing count in step B2 is smaller than the predetermined number of times, the flow returns to step B2. If the processing in step B2 is repeated the predetermined number of times and a voltage mode signal consisting of the predetermined number of bits is transmitted, end of transmission is determined in step B3, and the flow advances to step B4.

In step B4, a sync signal of a "1"-level voltage pulse is generated. In step B5, the output from a current detector 20 is fetched, and the presence/absence of a current mode signal from each terminal is then checked in step B6. If one bit (return or terminal signal) of data to be transmitted is "1", the terminal 14 transmits a current mode signal; if it is "0", it does not transmit the current mode signal. Therefore, when no current mode signal is detected within a predetermined period of time (e.g., 600 $\mu$s), this means that one bit (return signal) of the data to be transmitted corresponding to an interval to which the predetermined period of time belongs is "0"; when detected, this means that the bit (return signal) is "1".

If it is determined in step B6 that the return signal is present, an output voltage from the driver 22 is inverted in step B7. If no return signal is detected, the flow directly advances to step B8 while skipping step B7, that is, without inverting the output voltage from the driver 22.

In step B8, it is checked if a return operation from the terminal 14 is completed. If generation of sync signals (step B4) and reception of return signals (step B5) are not completed for all the bits of return data, the flow returns from step B8 to B4 and processing in steps B4 through B8 is repeated, since the return operation is not yet completed.

When the processing in steps B4 through B8 is executed the same number of times as the number of bits of the return data, it is determined in step B8 that the return operation from the terminal 14 is completed, and the flow advances to step B9. In step B9, it is checked whether all the bits of the received return data are "1". The return signal from the terminal 14 includes at least one "0"-level signal as a marker bit signal. Thus, it is normally unthinkable that all bits are "1". If all the bits are "1", it is determined that some abnormality such as short-circuit has occurred in the transmission lines 12, and an error processing such as generation of an alarm is executed in step B10.

On the other hand, if it is found in step B9 that at least one "0"-level signal has been received, it is then determined that normal operation is carried out, and the flow advances from step B9 to step B11.

In step B11, it is checked if the return data is normal. This checking operation is performed, for example, such that the same signal as the transmitted control signal CNT is returned as an affirmative response ACK, and it is checked if the affirmative response ACK coincides with the control signal CNT transmitted from the terminal. Alternatively, a status signal indicating a normal/abnormal detection result of transmission/reception in the terminal 14 is added to the end of return data from the terminal 14, and the checking operation in step B11 may be performed, depending on whether or not the status data is received.

In step B11, if the return data is normal, the activation data is cleared in step B12 to cancel activation, and the flow then returns to step B1. If it is determined in step B11 that the return data is abnormal, the flow skips step B12, and directly returns from step B11 to B1. In this case, since the activation data remains, the presence of the activation data is determined in step B1, and the central activation processing is executed once again. More specifically, the central activation processing is repeated until the activation data is normally transmitted.

(ii) Normal Mode Processing

If the absence of the activation data is determined in step B1, a terminal activation start signal and the first sync signal for terminal activation, shown in Fig. 12A, are transmitted in step B13. It is then checked in step B14 if a current mode activation signal is transmitted from the terminal 14. If there is no response from any terminal within a predetermined period of time (e.g., 600 μs) in response to the sync signal following the first start signal, it is determined that no terminal activation is performed, and the flow returns to step B1.

If the terminal activation signal shown in Fig. 12E is detected in step B14, the presence of terminal activation is determined, and the flow advances to step B15. The normal mode processing in steps B15 through B19 is then executed.

In the normal mode processing, the first sync signal is transmitted in step B15, and the output from the current detector 20 is fetched in step B16. As described above, in this embodiment, the absence of a current mode signal within the predetermined period of time (e.g., 600 μs) means that one bit of terminal data corresponding to an interval to which the predetermined period of time belongs is "0"; the presence of the current mode signal means that the bit is "1".

In step B17, the fetched output of the current detector 20 is checked. If the current mode signal is .detected, since the bit (terminal signal) of the terminal data corresponding to the present timing is "1", the output voltage of the driver 22 is inverted in step B18, and the flow advances to step B19.

If no terminal signal is received after the lapse of the predetermined period of time in step B17, since the bit of the terminal data corresponding to the present timing is "0", the flow skips the processing in step B18, and advances from step B17 to step B19. In this case, the output voltage of the driver 22 to the transmission lines 12 is not inverted.

It is checked in step B19 if sync signal transmission processing (step B15), reception processing (step B16), signal presence/absence determination processing (step B17), and the like are completed for all the bits of terminal data. If NO in step B19, the flow returns to step B15, and the processing in steps B15 through B19 is repeated.

When the processing in steps B15 to B19 is repeated the same number of times as the number of bits of the terminal data, the end of reception is determined in step B19, and the flow advances to step B20. In step B20, it is checked if all the bits of the received return data are "1". If all the bits are "1", it is determined that some abnormality such as short-circuit of transmission lines 12 has occurred, and an error processing such as generation of an alarm is executed in step B10.

If it is determined in step B20 that at least one "0"-level signal has been received, it is found that normal operation is carried out, and the control routine returns from step B20 to step B1.

When YES in step B9 or step B20, one or more activation processes are further executed to check the transmission state. When the answer "YES" is obtained several successive times in step B9 or step B20, the error processing in step B10 may then be executed.

## (2. Operation of Terminal 14)

Referring to Fig. 11, the terminal 14 checks in step C1 if the central processing apparatus 10 transmits a voltage mode central activation signal. If YES in step C1, i.e., if the central processing apparatus 10 transmits the central activation signal by the processing in step B2 in Fig. 10, the flow advances to step C2, and return processing in steps C2 to C10 is executed. However, if NO in step C1, the presence/absence of activation data is checked in step C11. If there is data to be transmitted to the central processing apparatus 10, i.e., activation data, terminal activation (slave activation) processing as loop processing of steps C12 to C19 is executed. If no central activation signal is transmitted in step C1 and if there is no terminal data to be transmitted to the central processing apparatus 10 from the terminal, the flow returns to step C1.

## (i) Return Processing

In the return processing, voltage mode transmission data which is transmitted from the central processing apparatus 10 (steps B2 and B3 in Fig. 10) is received bit by bit for every loop processing of steps C2 and C3 on the basis of the output from a receiver 34. If the reception of the predetermined number of bits is completed, the flow advances from step C3 to step C4. In step C4, it is discriminated if the address data in the received transmission data coincides with the self address. If the transmission system is not a check-sum system, this discrimination may be carried out in step C1 by receiving the address data. In step C4, if the addresses coincide, the flow advances from step C4 to step C5. If they do not coincide, the flow returns to step C1.

In step C5, the control stands by until the sync signal is received. If the sync signal is received, the control stands by for a predetermined period of time (e.g., 50 μs) in step C6. Thereafter, in step C7, one bit (return signal) of return data is transmitted in the current mode from the transmitter 36 onto the transmission lines 12. The current mode return signal is received by the central processing apparatus 10 (step B5 in Fig. 10), and the output voltage mode from the central processing apparatus 10 is thus inverted (step B7 in Fig. 10).

In step C8, it is checked if the return signal is "1". If YES in step C8, the flow skips step C9 and advances to step C10. In step C9, the voltage mode signal on the transmission lines 12 is received, and it is checked if the content of the received signal coincides with the content of the return signal which was sent immediately before reception. If YES in step C9, it is clear that the return signal transmitted in step C7 is received by the central processing apparatus 10 and the voltage mode of the transmission lines 12 is inverted. Thus, it is found that the transmission of the bit has normally been performed.

If the content of the return signal does not coincide with that of the received signal in step C9, it is clear that the bit (return signal) of return data is not correctly received by the central processing apparatus 10, and therefore the flow returns from step C9 directly to step C1. In this case, in the central processing apparatus 10, the return data of the predetermined number of bits cannot be obtained (step B11 in Fig. 10). Thus, the activation cancel processing (step B12 in Fig. 10) is skipped, and the central activation processing is executed once again. Namely, the terminal 14 executes the return processing once again, and the central activation processing in the central processing apparatus 10 and the return processing in the terminal 14 are repeated until the normal transmission of return data can be performed.

In step C10, it is checked if the normal transmission of all bits of the return signal has been completed. If the return processing of all bits of return data including the self address, monitor data and marker bit signal is not completed, the control flow returns to step C5, and the processing in steps C5 to C10 is repeated for the subsequent bit (return signal). On the other hand, if the return processing for all bits is completed, the return processing is finished and the control flow returns to step C1.

As stated above, in each terminal, only "1"-level return signal of monitor data is checked, and "0"-level return signal is not checked. Thus, a plurality of terminals can be set to the same single address. For example, since the on/off data of a switch may be represented by one bit, a plurality of switches connected to different terminals can be assigned to bits of the same address. In other words, if one address is occupied by one terminal, there remain bits which are not assigned. The formation of such useless bits can be prevented. In addition, the number of terminals corresponding to a specific number of loads can be reduced, and the possibility of collision of signals in the random transmission can be decreased. Thus, high-speed transmission can be realized.

(ii) Terminal Activation Processing

In the terminal activation processing, when it is determined in step C11 that the activation data is present, the reception of a sync signal transmitted in the processing of step B13 or step B15 in Fig. 10 of the central processing apparatus 10 is waited in step C12. If this sync signal is received, the control stands by for a predetermined period of time (e.g., 50 μs) in step C13, and one bit (terminal signal) of terminal data is transmitted in the current mode from the transmitter 36 onto the transmission lines 12 in step C14. The current mode terminal signal is received by the central processing apparatus 10 (step B17 in Fig. 10), and the output voltage mode from the central processing apparatus 10 to the transmission lines 12 is inverted (step B18 in Fig. 10).

In step C15, it is checked whether the terminal signal was one bit in the self address. If YES in step C15, the control advances to step C17. If NO in step C15, the control advances to step C16. In step C16, it is checked if the terminal signal was "1". If YES in step C16, the flow advances to step C17, and if NO in step C16, the flow advances to step C18. In step C17, the voltage mode signal of the transmission lines 12 is received, and it is checked if the received signal coincides with the terminal signal that has been output just previously. If YES in step C17, it is found that the bits of the terminal data have been normally transmitted, since the terminal signal transmitted in step C14 has been received by the central processing apparatus 10 and the voltage mode of the transmission lines 12 has been inverted.

In step C18, it is checked if all bits of the terminal signal including the self address, monitor data and marker bit signal have normally been transmitted. If NO in step C18, the control flow returns to step C12, and the processing in steps C12 to C18 is repeated for the subsequent bit (terminal signal) of the terminal data. If YES in step C18, the terminal activation processing is finished, and the flow returns to step C1.

If the content of the current mode signal transmitted in step C14 is different from the content of the voltage mode signal checked in step C17, it is determined that the current mode signal transmitted from the terminal 14 cannot be normally received by the central processing apparatus 10, and the loop processing is interrupted in step C17. The flow then returns to step C1. In this case, since the activation data of the terminal 14 remains, the terminal activation start signal is transmitted from the central processing apparatus 10 (step B13 in Fig. 10). When the flow advances from step C1 to step C11, the presence of activation data is determined in step C11, and the terminal activation processing is executed once again. More specifically, the terminal activation processing is repeated until the activation data is normally transmitted to the central processing apparatus.

Therefore, according to the present invention, the same single address can be assigned to a plurality of terminals in a bit-corresponding manner.

Also, the possibility of collision of signals from terminals is reduced, and the central processing apparatus can receive monitor data from a plurality of terminals by a single signal transmission operation. Thus, high-speed transmission is realized.

In the above embodiment, voltage mode signals are transmitted from the central processing apparatus side, and current mode signals are transmitted from the terminal side. However, for example, voltage mode signals may be transmitted from both the central processing apparatus side and the terminal side. In this case, "1"-level marker bit signal is transmitted from the terminal. When this "1"-level signal is not detected in the central processing apparatus, short-circuit of transmission lines is detected.

Further, the above-described embodiment is directed to the random transmission. However, this invention is applicable to a cyclic transmission system if the same address is assigned to a plurality of terminals. In this case, the flowchart of Fig. 10 is applicable, excepting steps B1 and B13 to B20.

In the embodiment, the current mode signals RPI are transmitted from the terminal in the terminal transmission period RTM, shown in Fig. 3A, in accordance with the sync signal SYNC transmitted from the central processing apparatus. However, instead of using the signals RPI, high-frequency signals may be transmitted onto the transmission lines.

The change in waveform level of voltage mode signal is not limited to the inversion of polarity. It suffices if a predetermined difference in level is provided.

The voltage signals transmitted to the terminals are not limited to the bipolar pulses. In the return period, sync pulses may be used.

The present invention is applicable to a system, as disclosed in Published Examined Japanese Patent Application No. 61-3155, wherein a current mode signal from a terminal is not converted into a voltage signal.

Additional advantages and modifications will readily occur to those skilled in the art. Therefore, the invention in its broader aspects is not limited to the specific details of the representative system and the illustrated example shown and described. Accordingly, modifications and changes may be made from such details without departing from the spirit or scope of the general inventive concept as defined by the appended claims and their equivalents.

## Claims

1. A signal transmission system comprising:
a main processing apparatus for transmitting transmission signals of predetermined pulses including an address signal, a start signal and a control signal;
pairs of transmission lines connected to the main processing apparatus; and
a plurality of terminals, connected to the transmission lines, for receiving the transmission signals from the main processing apparatus and for returning to the main processing apparatus transmission data including at least a self address and monitor data,
characterized in that said main processing apparatus (10) allows a random response from said plurality of terminals (14), and each terminal 14) includes means (32) for comparing, when the transmission data is returned from the terminal (14) to the main processing apparatus (10), a return 1-bit signal with a voltage mode of the transmission lines (12) for every bit if the transmission data is the self address, and also for comparing the return 1-bit signal with the voltage mode of the transmission lines (12) only for significant bits if the transmission data is the monitor data, thus discriminating whether the 1-bit signal has normally been transmitted.

2. A system according to claim 1, characterized in that said plurality of terminals (14) add a marker bit signal representative of abnormality data such as malfunction, transmission error or nontransmission to a final portion of the transmission data to be returned to the main processing apparatus (10).

3. A system according to claim 1, characterized in that said predetermined pulses are formed of bipolar pulses.

4. A system according to claim 1, characterized in that said predetermined pulses are formed of sync pulses in a time period in which said transmission data is returned.

5. A system according to claim 1, characterized in that the voltage mode of said transmission lines (12) is represented by a change due to inversion of polarity.

6. A system according to claim 1, characterized in that the voltage mode of said transmission lines (12) is represented by a change in level of voltage.

7. A system according to claim 1, characterized by that further comprising at least one relay means (16), connected between the transmission lines (12), for amplifying signals flowing through the transmission lines (12), correcting distortion of the signals flowing through the transmission lines (12), and keeping a power supply voltage fed to the terminals (14) to a predetermined value.

8. A system according to claim 1, characterized in that voltage mode signals are transmitted from the main processing apparatus (10) to the terminals (14), and current mode signals are returned from the terminals (14) to the main processing apparatus (10).

9. A signal transmission system comprising:
a main processing apparatus for transmitting transmission signals of predetermined pulses including an address signal, a start signal and a control signal;
pairs of transmission lines connected to the main processing apparatus; and
a plurality of terminals, connected to the transmission lines, for receiving the transmission signals from the main processing apparatus and for returning to the main processing apparatus transmission data including at least a self address and monitor data, said plurality of terminals having the same address,
characterized in that said main processing apparatus (10) allows a cyclic response from said plurality of terminals (14), and each terminal (14) includes means (32) for comparing, when the transmission data is returned from the terminal (14) to the main processing apparatus (10), a return 1-bit signal with a voltage mode of the transmission lines (12) for every bit if the transmission data is the self address, and also for comparing the return 1-bit signal with the voltage mode of the transmission lines (12) only for significant bits if the transmission data is the monitor data, thus discriminating whether the 1-bit signal has normally been transmitted.

10. A system according to claim 9, characterized in that said plurality of terminals (14) add a marker bit signal representative of abnormality data such as malfunction, transmission error or nontransmission to a final portion of the transmission data to be returned to the main processing apparatus (10).

11. A system according to claim 9, characterized in that said predetermined pulses are formed of bipolar pulses.

12. A system according to claim 9, characterized in that said predetermined pulses are formed of sync pulses in a time period in which said transmission data is returned.

13. A system according to claim 9, characterized in that the voltage mode of said transmission lines (12) is represented by a change due to inversion of polarity.

14. A system according to claim 9, characterized in that the voltage mode of said transmission lines (12) is represented by a change in level of voltage.

15. A system according to claim 9, characterized by further comprising at least one relay means (16), connected between the transmission lines (12), for amplifying signals flowing through the transmission lines (12), correcting distortion of the signals flowing through the transmission lines (12), and keeping a power supply voltage fed to the terminals (14) to a predetermined value.

16. A system according to claim 9, characterized in that voltage mode signals are transmitted from the main processing apparatus (10) to the terminals (14), and current mode signals are returned from the terminals (14) to the main processing apparatus (10).

F I G. 1

EP 0 381 170 A2

SYNC
SIGNAL
GENERATOR ~26

18

22

SIGNAL
PROCESSOR

F/F

28

DRIVER

12

LEADING EDGE
DETECTOR ~24

30

CURRENT
DETECTOR

20

10

F I G. 2

F I G. 3A

ADR/CNT

ST

RTM

OV

RPI

F I G. 3B

ADR/CNT

SYNC

ST

OV

RPV

F I G. 4

**F I G. 5**

EP 0 381 170 A2

F I G. 6A

SYNC     SYNC     RPV     SYNC

24V

OV

−24V

F I G. 6B

RPI

O     T = 0

F I G. 6C

ENB          $T_1$ ENB $T_2$          ENB

DIS          DIS          DIS

O $T_1$     $T_2$     O $T_1$     $T_2$     →T

F I G. 6D

RPI

O $T_1$     $T_2$     O $T_1$     $T_2$

EP 0 381 170 A2

AC 100V

POWER SUPPLY

+24V
+5V
−24V

RESET CIRCUIT

CPU

VDD
IN
OUT
OUT
RESET
IN
OUT
OUT
GND
OSCI OSC2

DATA
EOC
STC
CK GND

VDD
AIN

DB1
Tr1
T1
72
70
78
76
66
68
20
22

PCI
DB2
ASI
74

TO TRANSMISSION LINES 12

F I G. 7

EP 0 381 170 A2

F I G. 8

START

OUTPUT ← 0 — A1

VOLTAGE SIGNAL FALL ? — A2
NO
YES

T ← 0 — A3

TIMER START — A4

$T \geqq T_1$ ? — A5
NO
YES

IS RECEIVED CURRENT PRESENT ? — A6
NO
YES

OUTPUT ← 1 — A7

OUTPUT ← 0 — A8

$T \geqq T_2$ ? — A9
NO
YES

F I G. 9

EP 0 381 170 A2

FIG. 10

START

C1 — IS CENTRAL ACTIVATION SIGNAL PRESENT ?
— NO →
— YES ↓

C11 — IS ACTIVATION DATA PRESENT ?
— NO →
— YES ↓

C2 — DATA SIGNAL RECEIVED

C12 — SYNC SIGNAL RECEIVED

C3 — RECEPTION COMPLETED ?
— NO
— YES ↓

C13 — HAS PREDETERMINED TIME PASSED AFTER SYNC SIGNAL ?
— NO
— YES ↓

C4 — ADDRESS COINCIDES ?
— NO
— YES ↓

C14 — DATA TRANSMISSION

C5 — CYNC SIGNAL RECEPTION

C6 — HAS PREDETERMINED TIME PASSED AFTER SYNC SIGNAL ?
— NO
— YES ↓

C15 — IS TERMINAL SIGNAL ADDRESS ?
— NO
— YES

C16 — IS TERMINAL SIGNAL "1" ?
— YES
— NO

C7 — RETURN SIGNAL RECEPTION

C17 — DOES TRANSMISSION DATA COINCIDE WITH VOLTAGE SIGNAL ?
— NO →
— YES ↓

C8 — IS RETURN SIGNAL "1" ?
— NO
— YES ↓

C9 — DOES TRANSMISSION DATA COINCIDE WITH VOLTAGE SIGNAL ?
— NO
— YES ↓

C18 — IS TRANSMISSION COMPLETED ?
— NO
— YES ↓

C19 — ACTIVATION COMPLETED

C10 — IS RETURN COMPLETED ?
— NO
— YES

F I G. 11

SYNC PULSE

START

SLAVE TRANSMISSION PERIOD

18

START

ACTIVATION ENABLE
ZERO-CROSSING

F I G. 12A

TRANSMISSION/RECEPTION
SWITCHING PERIOD

START

DESTINATION
ADDRESS

CONTROL
DATA

ACK

MARKER
BIT
START

4    12    4    4    8    4                      8              1    1    1

ZERO-
CROSSING

CONTROL MODE

CHECK SUM

RETURN FLAG

ERROR FLAG

MODE

CH DESIGNATION

MASTER ACTIVATION
TRANSMISSION TIME

RETURN TIME

F I G. 12B

EP 0 381 170 A2

F I G. 12C

F I G. 12D

START | MODE | DUMMY | SELF ADDRESS | START

ZERO-CROSSING

2

ACTIVATION ENABLE

4

12

MODE | CH DESIGNATION | MONITOR DATA | START

2

8

8

1

ZERO-CROSSING

ACTIVATION ENABLE

MARKER BIT

F I G. 12E

EP 0 381 170 A2